# EUROPEAN PATENT SPECIFICATION

(11) **EP 3 420 659 B1**
(45) Date of publication and mention of the grant of the patent: **28.01.2026**
(21) Application number: 17757369.8
(22) Date of filing: 24.02.2017
(51) Int. Cl.: H04L 1/18, H04L 1/00, H04L 5/00, H04L 27/26

(54) **DOWNLINK CONTROL INFORMATION FOR NON-SCHEDULED UPLINK TRANSMISSIONS**
DOWNLINK-STEUERUNGSINFORMATIONEN FÜR UNGEPLANTE UPLINK-ÜBERTRAGUNGEN
INFORMATIONS DE COMMANDE DE LIAISON DESCENDANTE DESTINÉES À DES TRANSMISSIONS DE LIAISON MONTANTE NON PROGRAMMÉES

(30) Priority: 25.02.2016 US 201662299972 P
(43) Date of publication of application: 02.01.2019
(73) Proprietor: Apple Inc., Cupertino, CA 95014 (US)
(72) Inventor: HAMIDI-SEPEHR, Fatemeh, Santa Clara, California 95054 (US); BHORKAR, Abhijeet, Fremont, California 94555 (US); YE, Qiaoyang, Fremont, California 94538 (US); NIU, Huaning, Milpitas, California 95035 (US); JEON, Jeongho, San Jose, California 95134 (US)
(74) Representative: Lang, Johannes
(86) International application number: PCT/US2017/019490
(87) International publication number: WO 2017/147515

(56) References cited:
- WO-A1-2015/151729
- WO-A1-2016/182533
- US-A1- 2015 341 921
- US-A1- 2016 043 854
- US-A1- 2016 337 867
- INTEL CORPORATION: "Introduction of the Non-Scheduled UL Operation for eLAA", vol. RAN WG1, no. St. Julian's, Malta; 20160215 - 20160219, 6 February 2016 (2016-02-06), XP051064187, Retrieved from the Internet <URL:http://www.3gpp.org/ftp/tsg_ran/WG1_RL1/TSGR1_84/Docs/> [retrieved on 20160206]
- SAMSUNG: "Discussion on multi-subframe scheduling for UL LAA", vol. RAN WG1, no. St Julian's, Malta; 20160215 - 20160219, 6 February 2016 (2016-02-06), XP051064215, Retrieved from the Internet <URL:http://www.3gpp.org/ftp/tsg_ran/WG1_RL1/TSGR1_84/Docs/> [retrieved on 20160206]
- "Introduction of the Non-Scheduled UL Operation for eLAA", 3GPP TSG RAN2 WG1 MEETING #84 R1-160428,, 6 February 2016 (2016-02-06), St. Julian' s, Malta, XP051064187
- SAMSUNG: "Discussion on multi-subframe scheduling for UL LAA", 3GPP TSG RAN2 WG1 MEETING #84 R1-160557, 6 February 2016 (2016-02-06), St. Julian' s, Malta, XP051064215
- "Introduction of cross-burst scheduling", 3GPP TSG RAN2 WG1 MEETING #84 R1-160427, 6 February 2016 (2016-02-06), St. Julian' s, Malta, XP051064186

## Description

### Priority Claim

This application claims priority to United States Provisional Patent Application Serial No. 62/299,972 filed February 25, 2016, entitled "DOWNLINK CONTROL INFORMATION SIGNALING FOR NON-SCHEDULED UPLINK TRANSMISSION OVER UNLICENSED SPECTRUM".

### Technical Field

Embodiments described herein relate generally to wireless networks and communications systems. Some embodiments relate to cellular communication networks including 3GPP (Third Generation Partnership Project) networks, 3GPP LTE (Long Term Evolution) networks, and 3GPP LTE-A (LTE Advanced) networks, MulteFire^{™} (MF) networks, and 5G networks, although the scope of the embodiments is not limited in this respect. Some embodiments relate to downlink control information signaling for non-scheduled uplink transmissions without requiring an evolved NodeB (eNB) to transmit an uplink (UL) grant or perform a Listen-Before-Talk (LBT) procedure corresponding to the UL grant.

The patent document WO 2015/151729 A1 discloses a method and UE apparatus for grant-less PUSCH transmissions over the unlicensed band, wherein the indication concerning the MCS to be used for such PUSCH transmissions is received from the base station, within downlink control information, DCI.

### Background

The explosive growth in wireless traffic growth has led to an urgent need for rate improvement. With mature physical layer techniques, further improvement in spectral efficiency will be marginal. On the other hand, the scarcity of licensed spectrum in the low frequency band makes spectral expansion problematic. Thus, there are emerging interests in the operation of LTE systems in unlicensed spectrum. One such technique is labeled enhanced Licensed-Assisted Access (eLAA), which expands the system bandwidth by utilizing the flexible carrier aggregation (CA) framework introduced by the LTE-Advanced where a primary component carrier (termed the primary cell or PCell) is operated in licensed spectrum and one or secondary component carriers (termed secondary cells or SCells) are operated in unlicensed spectrum. Another approach is a standalone LTE system in the unlicensed spectrum, where LTE-based technology solely operates in unlicensed spectrum without requiring an "anchor" in licensed spectrum. This is an MF system.

In order to operate in unlicensed spectrum, MF and eLAA systems require signal structures and signaling techniques different from those of legacy LTE systems. For example, the non-exclusive nature of unlicensed spectrum requires a mechanism for eLAA/MF systems to fairly share the wireless medium with other systems including those operating with other technologies such as Wi-Fi. eLAA/MF incorporate a LBT procedure where radio transmitters first sense the medium and transmit only if the medium is sensed to be idle.

The LBT procedure can cause performance issues. For example, in eLAA and MF systems, the uplink (UL) throughput performance can be noticeably degraded. One cause of this degradation is due to the inefficiency of operating a scheduled system in unlicensed spectrum. The UL grant transmission requires a completion of multiple LBT procedures. For example, a LBT procedure occurs at the evolved NodeB (eNB) on the component carrier over which physical downlink control channel (PDCCH) scheduling a physical uplink shared channel (PUSCH) transmission or a physical uplink control channel (PUCCH) (*e.g.,* enhanced PUCCH (ePUCCH) in MF systems) is expected. Upon the reception of the UL grant carried in the PDCCH, the scheduled UE also performs an LBT before transmission. In addition, the at least four subframe latency between UL grant and the corresponding PUSCH/PUCCH transmission can also attribute to the UL performance issue.

The present disclosure relates to a method and corresponding apparatuses and computer-readable medium, according to the attached claims, for allowing a UE to operate in an unscheduled UL transmission mode on unlicensed spectrum that addresses the UL throughput performance degradation. The corresponding DL control channel, information, and transmission which ensure the operation are disclosed herein.

### Brief Description of the Drawings

FIG. 1 is a block diagram of a system including an evolved node B (eNB) and a user equipment (UE) that may operate in a wireless telecommunications network according to some embodiments described herein.
FIG. 2 illustrates an example timing diagram of a UE transmission on unlicensed spectrum.
FIG. 3 illustrates an example timing diagram of a non-scheduled, grantless UE transmission on unlicensed spectrum according to some embodiments.
FIG. 4 illustrates an example information contained within downlink control information according to some embodiments.
FIG. 5 is an example of a HARQ ACK feedback bitmap according to some embodiments.
FIG. 6 is an example of a HARQ ACK feedback bitmap with bundling according to some embodiments.
FIG. 7 is a block diagram of a User Equipment (UE) in accordance with some embodiments.
FIG. 8 illustrates a block diagram of a communication device such as an eNB or a UE, in accordance with some embodiments.

### Detailed Description

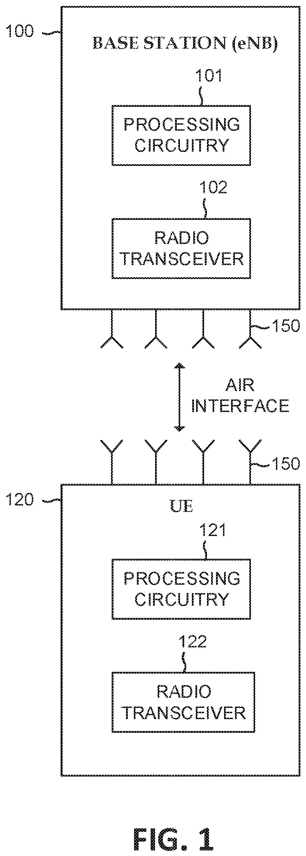

In Long Term Evolution (LTE) systems, a mobile terminal (referred to as a User Equipment or UE) connects to the cellular network via a base station (referred to as an evolved Node B or eNB). LTE systems usually utilize licensed spectrum for both uplink (UL) and downlink (DL) transmissions between a UE and an eNB. Fig. 1 illustrates an example of the components of a UE 120 and a base station or eNB 100. The eNB 100 includes processing circuitry 101 connected to a radio transceiver 102 for providing an air interface. The UE 120 includes processing circuitry 121 connected to a radio transceiver 122 for providing an air interface over the wireless medium. Each of the transceivers in the devices is connected to antennas 150.

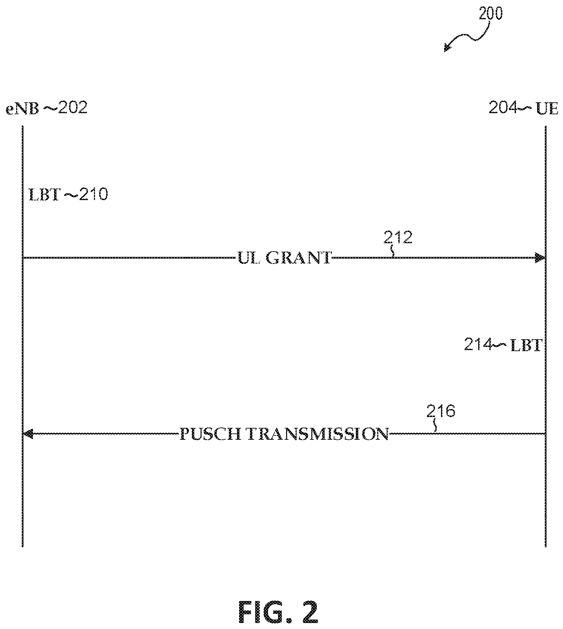

FIG. 2 illustrates an example timing diagram 200 of a UE transmission on unlicensed spectrum. For UE 204 to transmit data in an eNB 202 over unlicensed spectrum a LBT procedure must be done before the eNB 202 and/or the UE 204 transmit over the unlicensed medium. One approach for the UE 204 to transmit data requires the UE 204 to receive a UL grant from the eNB 202. Before the eNB 202 can transmit the UL grant, however, the eNB 202 must complete an LBT process 210 to ensure that the channel in the unlicensed spectrum is not currently being used by another transmitter. Once a successful LBT procedure is complete, the eNB 202 may transmit the UL grant 212 to the UE 204.

The UL grant provides the UE 204 with information on when the UE 204 is allowed to transmit data to the eNB 202. Just as with the eNB 202, the UE 204 must perform an LBT procedure 214 prior to the UE's allotted time to transmit data. Once a successful LBT procedure is completed, the UE 204 may transmit its data on the PUSCH channel 216. If, however, another device is interfering with the PUSCH channel, the LBT process will not be successful. If the time for transmitting data, as indicated in the UL grant, passes before a successful LBT is complete, the UE 204 will have to receive another UL grant to transmit its data. The use of two separate LBT procedures may cause performance issues regarding data transmissions between the eNB 202 and the UE 204.

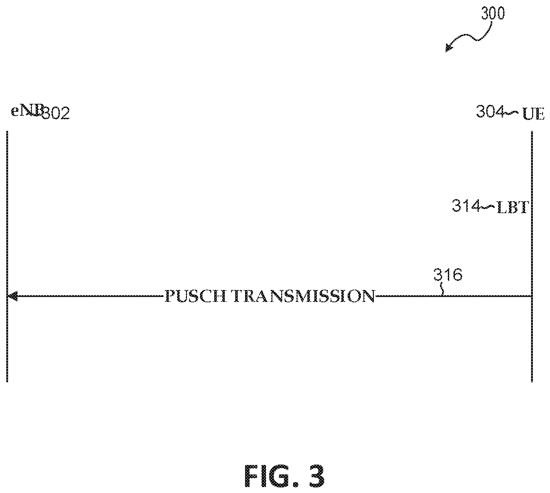

Described herein are various embodiments where the UE may transmit data over the PUSCH channel to the eNB without receiving a UL grant. Such grantless transmissions have the benefit of removing the need for the eNB to complete a successful LBT procedure to transmit the UL grant. FIG. 3 illustrates an example timing diagram 300 of a non-scheduled, grantless UE transmission on unlicensed spectrum according to some embodiments. In these embodiments, a UE 304 does not receive a UL grant from an eNB 302. Rather, when the UE 304 has data to transmit, the UE 304 does a LBT procedure 314 on the PUSCH channel. Once the PUSCH channel is indicated as being free by the LBT process, the UE 304 transmits its data on the PUSCH channel 316. Removing the need to receive the UL grant eliminates the need for the eNB 302 to complete a successful LBT process before transmitting the UL grant. In addition, because the UE 304 is not required to transmit at a particular time as set by a UL grant, the need for receiving additional UL grants due to missed transmit opportunities is also eliminated. PUSCH data transmissions, therefore, may be done more efficiently.

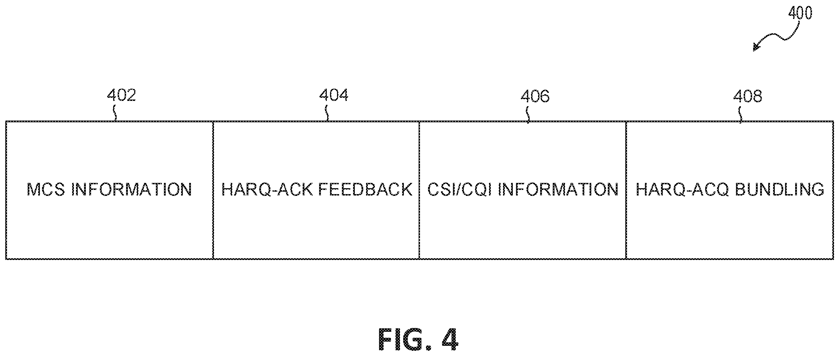

For the UE to take advantage of non-scheduled, grantless operation, the UE needs to determine various parameters for use in transmitting data over unlicensed spectrum. In various embodiments, a new downlink control information (DCI) format may be used. FIG. 4 illustrates an example of a downlink control information structure 400 according to some embodiments. In some embodiments, the new DCI format may be transmitted through a new DL control channel, similar to the physical dedicated control channel (PDCCH). The new DCI format may include multiple bits, *e.g.,* 5 bits, which provide modulation coding scheme (MCS) information 402 that the UE may use to select the MCS to use for PUSCH data transmissions over unlicensed spectrum. In some embodiments, the MCS information 402 may provide an explicit indication of which MCS the UE should use. In other embodiments, the MCS information 402 may provide additional information that the UE may use to adjust or refine the MCS that is to be used for future PUSCH data transmissions. In some embodiments, the DCI may include Channel state information (CSI) and/or channel quality indicator (CQI) information 406. The CSI and/or CQI information may be used to adjust or refine the MCS that is to be used for future PUSCH data transmissions.

The new DCI format 400 may also include multiple bits that provide hybrid automatic repeat request (HARQ) acknowledgment (ACK) feedback 404 regarding previously transmitted data from the UE. The number of bits used in this portion of the DCI depends on the maximum number of HARQ processes. In some embodiments, the HARQ-ACK feedback 404 may include information combined from multiple HARQ processes. In these embodiments, a HARQ bundling indication 408 may be included. Alternatively, configuration of HARQ-ACK bundling may be indicated via higher layer signaling, e.g. RRC signaling. The HARQ bundling indication 408 may provide an indication of how the multiple HARQ processes were combined/bundled together. Channel state information (CSI) and/or channel quality indicator (CQI) information 406 may also be included in the new DCI format 400. In various embodiments, not all of the information is provided in the DCI format. For example, the HARQ bundling information 408 and the CSI/CQI information 406 may not be present in DCI data. The order of the field may also vary from the order shown in FIG. 4.

As the DCI format 400 is different from earlier formats of the DCI, a new radio network temporary identifier (RNTI) may be used to indicate the new DCI format 400. In addition, the search space used for the DCI format 400 may be a UE-specific search space or a UE-group search space. When the UE-group search space is used, a cyclic redundancy check (CRC) may be scrambled with the new RNTI to indicate the new DCI format.

The new DCI format may include information used by the UE to select the MCS for UL PUSCH transmissions. In some embodiments, both link adaption and MCS may be selected by the UE based on the CSI/CQI feedback that is received from the eNB. In these embodiments, the eNB may determine the CQI based upon previous UL transmissions. In some embodiments, the eNB may determine the CQI based on HARQ information. For example, the quality of the channel may be indicated as poor if more than a threshold of data needs to be retransmitted as indicated by the HARQ information. Once determined, the eNB may provide this information to the UE using the new DCI format and/or through radio resource control (RRC) signaling. In addition, resources regarding the unlicensed spectrum that are available for the UE may also be included in the RRC signaling. For example, the number of carriers to use and/or the set of subframes that are available for UL PUSCH transmissions may be indicated. In other embodiments, the UE may assume that all subframes are available for grantless UL PUSCH (GUL) transmissions. In addition, in some embodiments, the resources available are specific to a particular UE.

In other embodiments, the UE may use an MCS that is explicitly set by eNB. For example, the eNB may indicate a specific MCS the UE should use on GUL PUSCH transmission via the RRC signaling or using the MCS information 402 in the new DCI format. The eNB may determine which MCS to indicate for the UE based upon the channel quality used for downlink transmissions, e.g., the PDSCH channel, and/or the previous UL transmissions, e.g., PUSCH/PUCCH/PRACH. In some embodiments, the eNB uses the MCS information and/or RRC signaling to provide the UE with an MCS adjustment rather than an indication as to which MCS to use.

In other embodiments, the UE may determine the MCS to use without any explicit MCS information from the eNB. For example, the UE may use a channel quality of the PDSCH or another DL channel to determine the MCS. In some embodiments, the channel quality is determined from a channel in unlicensed spectrum. In other embodiments, the channel quality indicator is determined from a channel in licensed spectrum.

In some embodiments, a combination of MCS selection techniques may be combined together. For example, RRC signaling may provide an initial MCS selection. CQI/CSI information may provide an indication of channel quality that updates more frequently than the RRC signaling. The CQI/CSI information may be used until the UE determines that the CQI/CSI information is stale and no longer relevant. Thus, the UE will use the RRC signaling information or estimation of channel status based on DL transmissions to select the MCS to use for future UL PUSCH transmissions anytime the CQI/CSI information is determined to be stale. In some embodiments, CQI/CSI information is deemed stale after a time period that is longer than when updated CQI/CSI information is scheduled to be received. Anytime the UE has not received CQI/CSI feedback from the eNB within the time period, the RRC signaling information or estimation of channel status based on DL transmissions may be used to select the MCS. Otherwise, the CQI/CSI feedback may be used by the UE to select the MCS. In some embodiments, the DCI may directly include a MCS selection rather than CQI/CSI information.

In the scheduled mode of operation, the UL grant indicates to the UE whether the transmission is the retransmission of previously transmitted data based on Redundancy Version (RV) and New Data Indicator (NDI). In non-scheduled, grantless mode there are no UL grants. The eNB, therefore, needs to provide HARQ-ACK feedback to the UE in a different way. This information may be used by the UE to generate the next UL PUSCH transmission. The eNB determines the HARQ ACK feedback after a PUSCH transmission.

In some embodiments, the eNB provides the HARQ-ACK feedback as part of the new DCI format 400. Specifically, the eNB may provide the UE with feedback via the HARQ-ACK feedback 404 portion of the DCI format 400. In other embodiments, the physical HARQ indicator channel may be used to transmit HARQ information to the UE.

In some embodiments, the eNB may receive multiple subframes from a UE as part of a U1, burst. The eNB cannot send HARQ-ACK feedback corresponding to the UL burst subframes immediately using unlicensed spectrum. A successful LBT process is done before the eNB can send the HARQ-ACK feedback. In some embodiments, however, the eNB can avoid having to do a LBT process before sending the HARQ-ACK feedback. In these embodiments, the HARQ-ACK feedback may be transmitted in a short control message. The control message is considered to be a short control message if the transmission time of the control message is less than a fraction of the observation time. For example, if the transmission time of the control message is less than 5% of the observation time, the eNB may transmit the control message with the HARQ-ACK feedback after the UL burst without doing an LBT. In some embodiments, the eNB has an N+4 processing delay, which results in a 4 subframe delay between the UE completing its transmission and the eNB sending the short control message. In other embodiments, the eNB may transmit the DL control information right after the completion of UL transmission. If the DL control transmission is within the maximum channel occupancy time (MCOT) initialized by the UE, a single-interval LBT is performed for DL control transmission. If the DL control transmission is within 16us from the end of previous UL transmission and it is within the MCOT, no LBT is performed for the transmission of DL control information. If the DL control transmission is outside of the MCOT, a Cat-4 LBT can be performed at the eNB side before the DCI transmission.

As the eNB may buffer HARQ information for later transmission, HARQ data may be combined together prior to transmission. For example, HARQ information that includes ACK/NACKSs of multiple HARQ process IDs may be bundled together. In one embodiment, the HARQ-ACK feedback corresponds to PUSCH Transport Blocks (TBs) from the same UE. The UE specific DCI may carry this information. In other embodiments, the HARQ-ACK feedback corresponds to PUSCH TBs from multiple UEs. In this case, the UE information may be encoded that allows the UE to decode its specific HARQ information. In other embodiments bundling of multiple HARQ processes, multiplexing over codewords, or both may be applied and the bundled HARQ-ACK feedback may be included in the new DCI format 400, *e.g.,* HARQ bundling 408 information. In some embodiments, PUSCH TB may be separately acknowledged, e.g., via a bitmap, where each bit may correspond to one PUSCH TB or one PUSCH subframe.

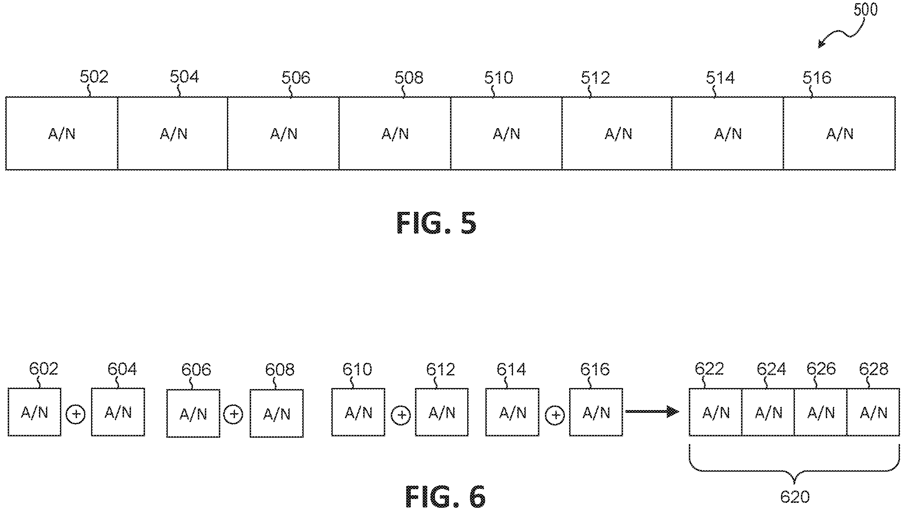

As discussed above, using unlicensed spectrum introduces an issue where a transmitter must wait to transmit data until a channel is idle, *e.g.,* the transmitter completes a successful LBT process. The LBT process means that the fixed timing between retransmissions and its HARQ-ACK feedback cannot be guaranteed. The eNB, therefore, has the ability to buffer and group HARQ information together. According to the present invention, the HARQ-ACK feedback of a process is mapped to a bitmap. The bitmap, therefore, provides HARQ-ACK information for multiple HARQ-ACK processes. FIG. 5 is an example of a HARQ-ACK feedback bitmap 500 according to some embodiments. In this example, the HARQ-ACK feedback bitmap 500 includes eight bits (502-516). Each of the eight bits corresponds to a HARQ process and indicates an ACK/NACK for that process According to the present invention, the number of bits equals the number of HARQ-ACK processes.

HARQ processes may be bundled together to reduce the payload of the HARQ-ACK feedback. For example, a single bit may represent two or more HARQ processes. How the HARQ processes are bundled together may be determined in various ways. For example, numerically contiguous HARQ processes numbers may be combined. FIG. 6 is an example of a HARQ ACK feedback bitmap 620 with bundling according to some embodiments. The same number of HARQ processes are shown in FIG. 5 and FIG. 6. The HARQ bitmap 620, however, includes only four bits (622-628) rather than eight bits. Each bit represents HARQ-ACK feedback from two separate HARQ processes. For example, bit 622 corresponds to the combined HARQ-ACK feedback of bits 602 and 604. In other embodiments, more than two HARQ processes may be combined into a single HARQ-ACK feedback bit.

The HARQ-ACK bundling may cause unneeded retransmissions when there are two bundled HARQ processes, but only one of the HARQ process requires a retransmission. When the HARQ-ACK feedback for these two HARQ processes are combined, the individual data for each HARQ process is lost. In some embodiments, the rule used to bundle the HARQ processes is set for each bitmap. The HARQ-ACK feedback 404 and the HARQ-ACK bundling configuration 408 information from the new DCI format 400 may be used by the UE to decode the HARQ-ACK feedback. Alternatively, the HARQ feedback 404 in the DCI and a HARQ bundling configuration that is predefined or configured by higher layer signaling such as RRC signaling may be used by the UE to decode the HARQ feedback. The rule used to bundle HARQ processes may change to minimize or reduce the number of unneeded retransmissions. For example, the HARQ processes may be combined using various known rules. If the bundling configuration is dynamically indicated in the DCI, the HARQ processes may be combined to minimize the number of HARQ processes that have different HARQ-ACK feedback. Thus, the rule that combines the most HARQ processes that have the same state may be selected and used. This may results in the smallest HARQ-ACK feedback payload and the smallest number of unneeded retransmissions.

### Example UE Description

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

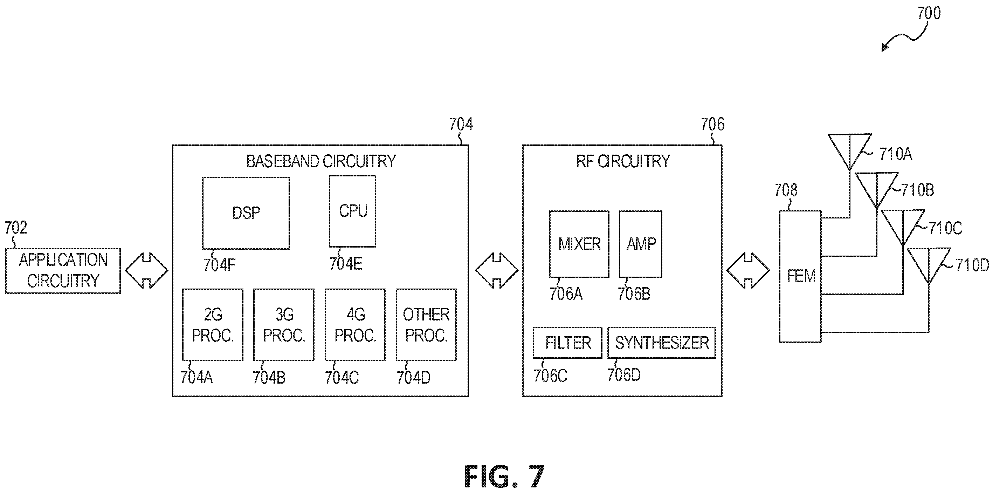

Embodiments described herein may be implemented into a system using any suitably configured hardware and/or software. Fig. 7 illustrates, for one embodiment, example components of a User Equipment (UE) device 700. In some embodiments, the UE device 700 may include application circuitry 702, baseband circuitry 704, Radio Frequency (RF) circuitry 706, frontend module (FEM) circuitry 708 and one or more antennas 710, coupled together at least as shown.

The application circuitry 702 may include one or more application processors. For example, the application circuitry 702 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system.

The baseband circuitry 704 may include circuitry such as, but not limited to, one or more single-core or multi-core processors. The baseband circuitry 704 may include one or more baseband processors and/or control logic to process baseband signals received from a receive signal path of the RF circuitry 706 and to generate baseband signals for a transmit signal path of the RF circuitry 706. Baseband processing circuity 704 may interface with the application circuitry 702 for generation and processing of the baseband signals and for controlling operations of the RF circuitry 706. For example, in some embodiments, the baseband circuitry 704 may include a second generation (2G) baseband processor 704a, third generation (3G) baseband processor 704b, fourth generation (4G) baseband processor 704c, and/or other baseband processor(s) 704d for other existing generations, generations in development or to be developed in the future (e.g., fifth generation (5G), 6G, etc.). The baseband circuitry 704 (e.g., one or more of baseband processors 704a-d) may handle various radio control functions that enable communication with one or more radio networks via the RF circuitry 706. The radio control functions may include, but are not limited to, signal modulation/demodulation, encoding/decoding, radio frequency shifting, etc. In some embodiments, modulation/demodulation circuitry of the baseband circuitry 704 may include Fast-Fourier Transform (FFT), precoding, and/or constellation mapping/demapping functionality. In some embodiments, encoding/decoding circuitry of the baseband circuitry 704 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 704 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 704e of the baseband circuitry 704 may be configured to run elements of the protocol stack for signaling of the PHY, MAC, RLC, PDCP and/or RRC layers. In some embodiments, the baseband circuitry may include one or more audio digital signal processor(s) (DSP) 704f. The audio DSP(s) 704f may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 704 and the application circuitry 702 may be implemented together such as, for example, on a system on a chip (SOC).

In some embodiments, the baseband circuitry 704 may provide for communication compatible with one or more radio technologies. For example, in some embodiments, the baseband circuitry 704 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 704 is configured to support radio communications of more than one wireless protocol may be referred to as multimode baseband circuitry.

RF circuitry 706 may enable communication with wireless networks using modulated electromagnetic radiation through a non-solid medium. In various embodiments, the RF circuitry 706 may include switches, filters, amplifiers, etc. to facilitate the communication with the wireless network RF circuitry 706 may include a receive signal path which may include circuitry to down-convert RF signals received from the FEM circuitry 708 and provide baseband signals to the baseband circuitry 704. RF circuitry 706 may also include a transmit signal path which may include circuitry to up-convert baseband signals provided by the baseband circuitry 704 and provide RF output signals to the FEM circuitry 708 for transmission.

In some embodiments, the RF circuitry 706 may include a receive signal path and a transmit signal path. The receive signal path of the RF circuitry 706 may include mixer circuitry 706a, amplifier circuitry 706b and filter circuitry 706c. The transmit signal path of the RF circuitry 706 may include filter circuitry 706c and mixer circuitry 706a. RF circuitry 706 may also include synthesizer circuitry 706d for synthesizing a frequency for use by the mixer circuitry 706a of the receive signal path and the transmit signal path. In some embodiments, the mixer circuitry 706a of the receive signal path may be configured to down-convert RF signals received from the FEM circuitry 708 based on the synthesized frequency provided by synthesizer circuitry 706d. The amplifier circuitry 706b may be configured to amplify the down-converted signals and the filter circuitry 706c may be a low-pass filter (LPF) or band-pass filter (BPF) configured to remove unwanted signals from the down-converted signals to generate output baseband signals. Output baseband signals may be provided to the baseband circuitry 704 for further processing. In some embodiments, the output baseband signals may be zero-frequency baseband signals, although this is not a requirement. In some embodiments, mixer circuitry 706a of the receive signal path may comprise passive mixers, although the scope of the embodiments is not limited in this respect.

In some embodiments, the mixer circuitry 706a of the transmit signal path may be configured to up-convert input baseband signals based on the synthesized frequency provided by the synthesizer circuitry 706d to generate RF output signals for the FEM circuitry 708. The baseband signals may be provided by the baseband circuitry 704 and may be filtered by filter circuitry 706c. The filter circuitry 706c may include a low-pass filter (LPF), although the scope of the embodiments is not limited in this respect.

In some embodiments, the mixer circuitry 706a of the receive signal path and the mixer circuitry 706a of the transmit signal path may include two or more mixers and may be arranged for quadrature downconversion and/or upconversion respectively. In some embodiments, the mixer circuitry 706a of the receive signal path and the mixer circuitry 706a of the transmit signal path may include two or more mixers and may be arranged for image rejection (e.g., Hartley image rejection). In some embodiments, the mixer circuitry 706a of the receive signal path and the mixer circuitry 706a may be arranged for direct downconversion and/or direct upconversion, respectively. In some embodiments, the mixer circuitry 706a of the receive signal path and the mixer circuitry 706a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 706 may include analog-to-digital converter (ADC) and digital-to-analog converter (DAC) circuitry and the baseband circuitry 704 may include a digital baseband interface to communicate with the RF circuitry 706.

In some dual-mode embodiments, a separate radio IC circuitry may be provided for processing signals for each spectrum, although the scope of the embodiments is not limited in this respect.

In some embodiments, the synthesizer circuitry 706d may be a fractional-N synthesizer or a fractional N/N+1 synthesizer, although the scope of the embodiments is not limited in this respect as other types of frequency synthesizers may be suitable. For example, synthesizer circuitry 706d may be a delta-sigma synthesizer, a frequency multiplier, or a synthesizer comprising a phase-locked loop with a frequency divider.

The synthesizer circuitry 706d may be configured to synthesize an output frequency for use by the mixer circuitry 706a of the RF circuitry 706 based on a frequency input and a divider control input. In some embodiments, the synthesizer circuitry 706d may be a fractional N/N+1 synthesizer.

In some embodiments, frequency input may be provided by a voltage controlled oscillator (VCO), although that is not a requirement. Divider control input may be provided by either the baseband circuitry 704 or the applications processor 702 depending on the desired output frequency. In some embodiments, a divider control input (e.g., N) may be determined from a look-up table based on a channel indicated by the applications processor 702.

Synthesizer circuitry 706d of the RF circuitry 706 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 706d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (f_{LO}). In some embodiments, the RF circuitry 706 may include an IQ/polar converter.

FEM circuitry 708 may include a receive signal path which may include circuitry configured to operate on RF signals received from one or more antennas 710, amplify the received signals and provide the amplified versions of the received signals to the RF circuitry 706 for further processing. FEM circuitry 708 may also include a transmit signal path which may include circuitry configured to amplify signals for transmission provided by the RF circuitry 706 for transmission by one or more of the one or more antennas 710.

In some embodiments, the FEM circuitry 708 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 706). The transmit signal path of the FEM circuitry 708 may include a power amplifier (PA) to amplify input RF signals (e.g., provided by RF circuitry 706), and one or more filters to generate RF signals for subsequent transmission (e.g., by one or more of the one or more antennas 710.

In some embodiments, the UE device 700 may include additional elements such as, for example, memory/storage, display, camera, sensor, and/or input/output (I/O) interface.

### Example Machine Description

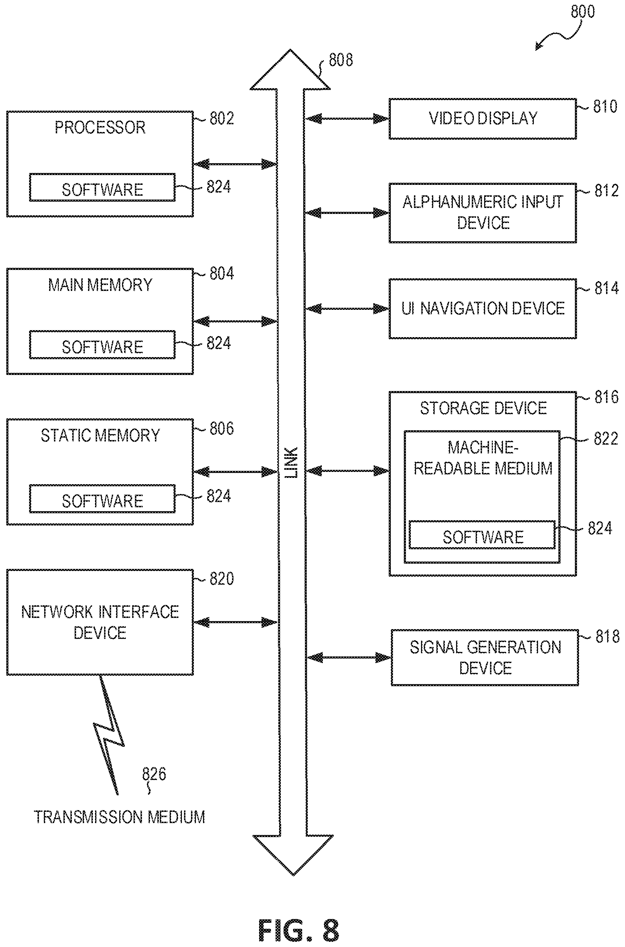

Fig. 8 illustrates a block diagram of an example machine 800 upon which any one or more of the techniques (e.g., methodologies) discussed herein may perform. In alternative embodiments, the machine 800 may operate as a standalone device or may be connected (e.g., networked) to other machines. In a networked deployment, the machine 800 may operate in the capacity of a server machine, a client machine, or both in server-client network environments. In an example, the machine 800 may act as a peer machine in peer-to-peer (P2P) (or other distributed) network environment. The machine 800 may be a user equipment (UE), evolved Node B (eNB), Wi-Fi access point (AP), Wi-Fi station (STA), personal computer (PC), a tablet PC, a set-top box (STB), a personal digital assistant (PDA), a mobile telephone, a smart phone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Machine (e.g., computer system) 800 may include a hardware processor 802 (e.g., a central processing unit (CPU), a graphics processing unit (GPU), a hardware processor core, or any combination thereof), a main memory 804 and a static memory 806, some or all of which may communicate with each other via an interlink (e.g., bus) 808. The machine 800 may further include a display unit 810, an alphanumeric input device 812 (e.g., a keyboard), and a user interface (UI) navigation device 814 (e.g., a mouse). In an example, the display unit 810, input device 812 and UI navigation device 814 may be a touch screen display. The machine 800 may additionally include a storage device (e.g., drive unit) 816, a signal generation device 818 (e.g., a speaker), a network interface device 820, and one or more sensors, such as a global positioning system (GPS) sensor, compass, accelerometer, or other sensor. The machine 800 may include an output controller 828, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The storage device 816 may include a machine readable medium 822 on which is stored one or more sets of data structures or instructions 824 (e.g., software) embodying or utilized by any one or more of the techniques or functions described herein. The instructions 824 may also reside, completely or at least partially, within the main memory 804, within static memory 806, or within the hardware processor 802 during execution thereof by the machine 800. In an example, one or any combination of the hardware processor 802, the main memory 804, the static memory 806, or the storage device 816 may constitute machine readable media.

While the machine readable medium 822 is illustrated as a single medium, the term "machine readable medium" may include a single medium or multiple media (e.g., a centralized or distributed database, and/or associated caches and servers) configured to store the one or more instructions 824.

The term "machine readable medium" may include any medium that is capable of storing, encoding, or carrying instructions for execution by the machine 800 and that cause the machine 800 to perform any one or more of the techniques of the present disclosure, or that is capable of storing, encoding or carrying data structures used by or associated with such instructions. Nonlimiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 824 may further be transmitted or received over a communications network 826 using a transmission medium via the network interface device 820 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 520 may include one or more physical jacks (e.g., Ethernet, coaxial, or phone jacks) or one or more antennas to connect to the communications network 526. In an example, the network interface device 520 may include a plurality of antennas to wirelessly communicate using at least one of single-input multiple-output (SIMO), multiple-input multiple-output (MIMO), or multiple-input single-output (MISO) techniques. In some examples, the network interface device 520 may wirelessly communicate using Multiple User MIMO techniques. The term "transmission medium" shall be taken to include any intangible medium that is capable of storing, encoding or carrying instructions for execution by the machine 500, and includes digital or analog communications signals or other intangible medium to facilitate communication of such software.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to suggest a numerical order for their objects.

The embodiments as described above may be implemented in various hardware configurations that may include a processor for executing instructions that perform the techniques described. Such instructions may be contained in a machine-readable medium such as a suitable storage medium or a memory or other processor-executable medium.

The embodiments as described herein may be implemented in a number of environments such as part of a wireless local area network (WLAN), 3rd Generation Partnership Project (3GPP) Universal Terrestrial Radio Access Network (UTRAN), or Long-Term-Evolution (LTE) or a Long-Term-Evolution (LTE) communication system, although the scope of the disclosure is not limited in this respect. An example LTE system includes a number of mobile stations, defined by the LTE specification as User Equipment (UE), communicating with a base station, defined by the LTE specifications as an eNB.

Antennas referred to herein may comprise one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, antennas may be effectively separated to take advantage of spatial diversity and the different channel characteristics that may result between each of antennas and the antennas of a transmitting station. In some MIMO embodiments, antennas may be separated by up to 1/10 of a wavelength or more.

In some embodiments, a receiver as described herein may be configured to receive signals in accordance with specific communication standards, such as the Institute of Electrical and Electronics Engineers (IEEE) standards including IEEE 802.11 standards and/or proposed specifications for WLANs, although the scope of the disclosure is not limited in this respect as they may also be suitable to transmit and/or receive communications in accordance with other techniques and standards. In some embodiments, the receiver may be configured to receive signals in accordance with the IEEE 802.16-2004, the IEEE 802.16(e) and/or IEEE 802.16(m) standards for wireless metropolitan area networks (WMANs) including variations and evolutions thereof, although the scope of the disclosure is not limited in this respect as they may also be suitable to transmit and/or receive communications in accordance with other techniques and standards. In some embodiments, the receiver may be configured to receive signals in accordance with the Universal Terrestrial Radio Access Network (UTRAN) LTE communication standards. For more information with respect to the IEEE 802.11 and IEEE 802.16 standards, please refer to "IEEE Standards for Information Technology -- Telecommunications and Information Exchange between Systems" - Local Area Networks - Specific Requirements - Part 11 "Wireless LAN Medium Access Control (MAC) and Physical Layer (PHY), ISO/IEC 8802-11: 1999", and Metropolitan Area Networks - Specific Requirements - Part 16: "Air Interface for Fixed Broadband Wireless Access Systems," May 2005 and related amendments/versions. For more information with respect to UTRAN LTE standards, see the 3rd Generation Partnership Project (3GPP) standards for UTRAN-LTE, including variations and evolutions thereof.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with a claim standing on its own as a separate embodiment. The scope of the present invention is defined by the attached claims.

## Claims

1. A method for a user equipment (120, 204, 304), UE (120, 204, 304), comprising:
decoding downlink signaling received in a physical downlink control channel, PDCCH, indicating a modulation coding scheme, MCS, for a non-scheduled, grantless physical uplink shared channel, PUSCH, transmission to a base station, eNB (100, 202, 302), the downlink signaling received from the eNB (100, 202, 302), and wherein the non-scheduled, grantless transmission is on unlicensed spectrum and is unassociated with an uplink grant;
performing a listen-before-talk, LBT, procedure on one or more channels to determine if any of the one or more channels are available;
encoding data for transmission to the eNB (100, 202, 302) on the one or more channels after the LBT procedure (214, 314), wherein the data is modulated according to the MCS, and wherein the data is to be transmitted as part of the non-scheduled, grantless transmission;
**characterized by**
decoding hybrid automatic repeat request, HARQ, acknowledgement, ACK, information from downlink control information, DCI, received in response to the non-scheduled, grantless transmission, wherein the HARQ ACK information includes a bitmap field, wherein each bit of the bitmap field corresponds to a respective HARQ process, and a number of bits of the bitmap field is based on a maximum number of HARQ processes.

2. The method of claim 1, wherein the HARQ ACK corresponds to the data.

3. The method of claim 1,wherein each bit of the bitmap (500, 620) is associated with at least one previously transmitted subframe.

4. The method of claim 1, further comprising descrambling the downlink signaling using a radio network temporary identifier, RNTI.

5. The method of claim 1, further comprising:
decoding second downlink control information, DCI, received from the eNB (100, 202, 302);
updating the MCS, wherein the second DCI comprises a second plurality of bits used to update the MCS;
performing a second listen-before-talk, LBT, procedure on the one or more channels to determine if any of the one or more channels are available; and
encoding second data for transmission to the eNB (100, 202, 302) on the one or more channels after the second LBT procedure determines that the one or more channels are available, wherein the second data is modulated according to the updated MCS, and wherein the data is to be transmitted as part of another non-scheduled, grantless transmission.

6. The method of claim 1, further comprising decoding hybrid automatic repeat request, HARQ, acknowledgement, ACK, information for the data in a control message, wherein a transmission time of the control message is less than a fraction of an observation time of an LBT process (210) of the eNB (100, 202, 302), and wherein the eNB (100, 202, 302) refrains from performing a LBT process (210) prior to transmission of the control message.

7. The method of claims 1 or 6, wherein the channels available are specific to the UE (120, 204, 304).

8. The method of claims 1 or 6, wherein the channels available are decoded from radio resource control, RRC, signaling.

9. The method of claim 1, wherein the downlink signaling comprise channel state information, CSI, of the PUSCH, and wherein the MCS is further adjusted or refined based upon the CSI.

10. The method of claim 1, wherein the downlink signaling comprise an MCS adjustment based upon an estimated quality of the PUSCH from the eNB (100, 202, 302).

11. An apparatus for a user equipment (120, 204, 304), UE (120, 204, 304), the apparatus comprising:
processing circuitry configured to perform a method according to any of claims 1 to 10.

12. A user equipment (120, 204, 304), UE (120, 204, 304), comprising the apparatus of claim 11.

13. A non-transitory computer-readable memory medium, comprising instructions which, when executed by a computer, cause the computer to carry out a method of any of claims 1 to 10.

## Patentansprüche

1. Verfahren für eine Benutzervorrichtung (120, 204, 304), UE (120, 204, 304), umfassend:
Decodieren einer Downlink-Signalisierung, die in einem physikalischen Downlink-Steuerkanal, PDCCH, empfangen wird, der ein Modulationscodierungsschema, MCS, für eine nicht geplante, gewährungsfreie Übertragung eines gemeinsam genutzten physikalischen Uplink-Kanals, PUSCH, an eine Basisstation, eNB (100, 202, 302), anzeigt, wobei die Downlink-Signalisierung von der eNB (100, 202, 302) empfangen wird, und wobei die nicht geplante, gewährungsfreie Übertragung auf einem unlizenzierten Spektrum ist und nicht mit einer Uplink-Gewährung assoziiert ist;
Durchführen einer Listen-before-Talk-Prozedur, LBT-Prozedur, auf einem oder mehreren Kanälen, um zu bestimmen, ob einer des einen oder der mehreren Kanäle verfügbar ist;
Codieren von Daten zur Übertragung an die eNB (100, 202, 302) auf dem einen oder den mehreren Kanälen nach der LBT-Prozedur (214, 314), wobei die Daten gemäß dem MCS moduliert werden, und wobei die Daten als Teil der nicht geplanten, gewährungsfreien Übertragung zu übertragen sind;
**gekennzeichnet durch**
Decodieren von Hybrid Automatic Repeat Request-, HARQ-, Bestätigungs-, ACK-, Informationen aus Downlink-Steuerinformationen, DCI, die als Reaktion auf die nicht geplante, gewährungsfreie Übertragung empfangen werden, wobei die HARQ-ACK-Informationen ein Bitmap-Feld enthalten, wobei jedes Bit des Bitmap-Feldes einem jeweiligen HARQ-Prozess entspricht und eine Anzahl von Bits des Bitmap-Feldes auf einer maximalen Anzahl von HARQ-Prozessen basiert.

2. Verfahren nach Anspruch 1, wobei die HARQ-ACK den Daten entspricht.

3. Verfahren nach Anspruch 1, wobei jedes Bit der Bitmap (500, 620) mit mindestens einem zuvor übertragenen Unterrahmen assoziiert ist.

4. Verfahren nach Anspruch 1, ferner umfassend das Entschlüsseln der Downlink-Signalisierung unter Verwendung einer temporären Funknetzkennung, RNTI.

5. Verfahren nach Anspruch 1, ferner umfassend:
Decodieren von zweiten Downlink-Steuerinformationen, DCI, die von der eNB (100, 202, 302) empfangen werden;
Aktualisieren des MCS, wobei die zweiten DCI eine zweite Vielzahl von Bits umfassen, die zum Aktualisieren des MCS verwendet werden;
Durchführen einer zweiten Listen-before-Talk-Prozedur, LBT-Prozedur, auf dem einen oder den mehreren Kanälen, um zu bestimmen, ob einer des einen oder der mehreren Kanäle verfügbar ist; und
Codieren von zweiten Daten zur Übertragung an die eNB (100, 202, 302) auf dem einen oder den mehreren Kanälen, nachdem die zweite LBT-Prozedur bestimmt, dass der eine oder die mehreren Kanäle verfügbar sind, wobei die zweiten Daten gemäß dem aktualisierten MCS moduliert werden, und wobei die Daten als Teil einer anderen nicht geplanten, gewährungsfreien Übertragung zu übertragen sind.

6. Verfahren nach Anspruch 1, ferner umfassend das Decodieren von Hybrid Automatic Repeat Request-, HARQ-, Bestätigungs-, ACK-, Informationen für die Daten in einer Steuernachricht, wobei eine Übertragungszeit der Steuernachricht kleiner als ein Bruchteil einer Beobachtungszeit eines LBT-Prozesses (210) der eNB (100, 202, 302) ist, und wobei die eNB (100, 202, 302) das Durchführen eines LBT-Prozesses (210) vor der Übertragung der Steuernachricht unterlässt.

7. Verfahren nach Anspruch 1 oder 6, wobei die verfügbaren Kanäle für die UE (120, 204, 304) spezifisch sind.

8. Verfahren nach Anspruch 1 oder 6, wobei die verfügbaren Kanäle aus einer Funkressourcensteuerungs-, RRC-, Signalisierung decodiert werden.

9. Verfahren nach Anspruch 1, wobei die Downlink-Signalisierung Kanalzustandsinformationen, CSI, des PUSCH umfasst, und wobei das MCS basierend auf den CSI weiter angepasst oder verfeinert wird.

10. Verfahren nach Anspruch 1, wobei die Downlink-Signalisierung eine MCS-Anpassung basierend auf einer geschätzten Qualität des PUSCH von der eNB (100, 202, 302) umfasst.

11. Vorrichtung für eine Benutzervorrichtung (120, 204, 304), UE (120, 204, 304), wobei die Vorrichtung umfasst:
eine Verarbeitungsschaltung, die konfiguriert ist, um ein Verfahren nach einem der Ansprüche 1 bis 10 durchzuführen.

12. Benutzervorrichtung (120, 204, 304), UE (120, 204, 304), umfassend die Vorrichtung nach Anspruch 11.

13. Nichtflüchtiges computerlesbares Speichermedium, umfassend Anweisungen, die, wenn sie von einem Computer ausgeführt werden, den Computer veranlassen, ein Verfahren nach einem der Ansprüche 1 bis 10 auszuführen.

## Revendications

1. Un procédé pour un équipement utilisateur (120, 204, 304), UE (120, 204, 304), comprenant :
le décodage d'une signalisation de liaison descendante reçue dans un canal physique de contrôle de liaison descendante, PDCCH, indiquant un schéma de codage et de modulation, MCS, pour une transmission de canal physique partagé de liaison montante, PUSCH, non planifiée et sans autorisation vers une station de base, eNB (100, 202, 302), la signalisation de liaison descendante étant reçue à partir de l'eNB (100, 202, 302), et dans lequel la transmission non planifiée et sans autorisation est sur un spectre sans licence et n'est pas associée à une autorisation de liaison montante ;
la réalisation d'une procédure d'écoute avant d'émettre, LBT, sur un ou plusieurs canaux pour déterminer s'il y a des un ou plusieurs canaux qui sont disponibles ;
le codage des données pour la transmission à l'eNB (100, 202, 302) sur les un ou plusieurs canaux après la procédure LBT (214, 314), dans lequel les données sont modulées selon le MCS, et dans lequel les données doivent être transmises dans le cadre de la transmission non planifiée et sans autorisation ;
**caractérisé par** :
le décodage d'une information d'accusé de réception, ACK, de requête de répétition automatique hybride, HARQ, à partir d'une information de contrôle de liaison descendante, DCI, reçue en réponse à la transmission non planifiée et sans autorisation, dans lequel l'information HARQ ACK inclut un champ bitmap, dans lequel chaque bit du champ bitmap correspond à un processus HARQ respectif, et un nombre de bits du champ bitmap est basé sur un nombre maximal de processus HARQ.

2. Le procédé selon la revendication 1, dans lequel l'ACK HARQ correspond aux données.

3. Le procédé selon la revendication 1, dans lequel chaque bit du bitmap (500, 620) est associé à au moins une sous-trame précédemment transmise.

4. Le procédé selon la revendication 1, comprenant en outre le désembrouillage de la signalisation de liaison descendante en utilisant un identifiant temporaire de réseau radio, RNTI.

5. Le procédé selon la revendication 1, comprenant en outre :
le décodage d'une seconde information de contrôle de liaison descendante, DCI, reçue à partir de l'eNB (100, 202, 302) ;
la mise à jour du MCS, dans lequel la seconde DCI comprend une seconde pluralité de bits utilisés pour mettre à jour le MCS ;
la réalisation d'une seconde procédure d'écoute avant d'émettre, LBT, sur les un ou plusieurs canaux pour déterminer s'il y a des un ou plusieurs canaux qui sont disponibles ; et
le codage de secondes données pour la transmission à l'eNB (100, 202, 302) sur les un ou plusieurs canaux après que la seconde procédure LBT a déterminé que les un ou plusieurs canaux sont disponibles, dans lequel les secondes données sont modulées selon le MCS mis à jour, et dans lequel les données doivent être transmises dans le cadre d'une autre transmission non planifiée et sans autorisation.

6. Le procédé selon la revendication 1, comprenant en outre le décodage d'une information d'accusé de réception, ACK, de requête de répétition automatique hybride, HARQ, pour les données dans un message de contrôle, dans lequel un temps de transmission du message de contrôle est inférieur à une fraction d'un temps d'observation d'un processus LBT (210) de l'eNB (100, 202, 302), et dans lequel l'eNB (100, 202, 302) s'abstient de réaliser un processus LBT (210) avant la transmission du message de contrôle.

7. Le procédé selon les revendications 1 ou 6, dans lequel les canaux disponibles sont spécifiques à l'UE (120, 204, 304) .

8. Le procédé selon les revendications 1 ou 6, dans lequel les canaux disponibles sont décodés à partir de la signalisation de contrôle de ressources radio, RRC.

9. Le procédé selon la revendication 1, dans lequel la signalisation de liaison descendante comprend une information d'état de canal, CSI, du PUSCH, et dans lequel le MCS est en outre ajusté ou affiné sur la base de la CSI.

10. Le procédé selon la revendication 1, dans lequel la signalisation de liaison descendante comprend un ajustement MCS sur la base d'une qualité estimée du PUSCH à partir de l'eNB (100, 202, 302).

11. Un appareil pour un équipement utilisateur (120, 204, 304), UE (120, 204, 304), l'appareil comprenant :
une circuiterie de traitement configurée pour réaliser un procédé selon l'une des revendications 1 à 10.

12. Un équipement utilisateur (120, 204, 304), UE (120, 204, 304), comprenant l'appareil selon la revendication 11.

13. Un support de mémoire non transitoire lisible par calculateur, comprenant des instructions qui, lorsqu'elles sont exécutées par un calculateur, amènent le calculateur à réaliser un procédé selon l'une des revendications 1 à 10.
